## Europäisches Patentamt
## European Patent Office
## Office européen des brevets

(11) Publication number: **0 061 334**
**B1**

(12) **EUROPEAN PATENT SPECIFICATION**

(45) Date of publication of patent specification: **05.03.86**

(51) Int. Cl.⁴: **G 01 F 23/02**

(21) Application number: **82301463.4**

(22) Date of filing: **22.03.82**

(54) **Liquid level gauge assemblies for providing remote and local displays of liquid level.**

(30) Priority: **23.03.81 US 245871**

(43) Date of publication of application:
**29.09.82 Bulletin 82/39**

(45) Publication of the grant of the patent:
**05.03.86 Bulletin 86/10**

(84) Designated Contracting States:
**DE FR GB**

(56) References cited:
**EP-A-0 049 477**
**CH-A- 297 676**
**US-A-3 713 338**
**US-A-3 844 171**

(73) Proprietor: **THE BABCOCK & WILCOX
COMPANY**
**1010 Common Street P.O. Box 60035**
**New Orleans Louisiana 70160 (US)**

(72) Inventor: **Berthold, John**
**1370 N.Union Avenue**
**Salem Ohio 44460 (US)**

(74) Representative: **Cotter, Ivan John et al**
**D. YOUNG & CO. 10 Staple Inn**
**London WC1V 7RD (GB)**

Courier Press, Leamington Spa, England.

## Description

The present invention relates to liquid level gauge assemblies for providing a remote display of a liquid level in a container.

US Patent No. US—A—3 713 338 discloses a liquid level gauge assembly for providing a remote display of a liquid level in a container, comprising optical means operative to produce an optical signal indicative of the liquid level in the container, remote liquid level display means located remote from the container, and transmission means operative to transmit the optical signal to the remote liquid level display means. The transmission means is a fibre optic assembly and the optical liquid level signal is focused on one end of the fibre optic assembly and is transmitted along a significant length of the fibre optic assembly to the remote readout or display means, which is located where the other end of the fibre optic assembly terminates.

Another liquid level gauge using a fibre optic assembly is disclosed in US—A—3 844 171.

The present applicants have previously devised a liquid level gauge assembly in which a local readout or display of the liquid water level is provided in addition to the remote readout or display. According to this prior liquid level gauge assembly, which is believed not to form part of the state of the art within the meaning of EPC Article 54, a local display was provided by mounting a short fibre optic assembly side-by-side with the remote display fibre optic assembly and focussing the optical signal on both of the fibre optic assemblies. The short fibre optic assembly thus provided the local readout or display while the second fibre optic assembly of significant length terminating at a remote location provided the remote readout or display. Applying this system to measure the water level of a boiler required the extended length remote display fibre optic assembly to extend up to 100m (330 feet) to a control room of power generating plant. The short fibre optic assembly was relatively short since it terminated right at the boiler drum to provide the local display of boiler water level.

Certain problems arise with such side-by-side fibre optic assemblies to provide local and remote water level readout. Since the same optical signal must be collected by both of the side-by-side fibre optic light guide assemblies, the focal spot which illuminates these assemblies must have optimum size in order that 50 percent of the incident light enter each fibre. Furthermore, thermal variations generated dimensional changes in the mounting hardware of the fibre optic pair, further requiring that the focal spot of the optical signal be even larger in area than otherwise required to cover the fibre optic pair to compensate for the thermally induced movements. This resulted in a weak optical signal to the fibre optic pair, which signal was then further diminished in the long length loss of the remote readout fibre optic.

According to the present invention there is provided a liquid level gauge assembly for providing a remote display of a liquid level in a container, comprising optical means operative to produce an optical signal indicative of the liquid level in the container, remote liquid level display means located remote from the container, and transmission means operative to transmit the optical signal to the remote liquid level display means, characterised in that the optical means is operative to produce an optical signal indicative of the liquid level in a boiler, optical splitting means is operative to divide the optical liquid level signal of the optical means into first and second optical signals, the transmission means is operative to transmit the first optical signal from the optical splitting means to the remote display means, which is located remote from the optical splitting means, and local liquid level display means is located proximate to the optical splitting means to display the second optical signal from the optical splitting means.

The above-mentioned problems associated with the above-described prior liquid level gauge assemblies may be at least partially solved by an embodiment of the present invention described hereinbelow, which includes a beam splitter for the optical liquid level signal, the beam splitter transmitting the majority of the optical signal to a single fibre optic assembly of extended length which provides a remote readout of the liquid level signal. A small portion of the optical signal is reflected by the beam splitter directly to a local display means in the form of a glass diffuser screen, which screen provides a local readout of the optical liquid level signal. By eliminating the need for side-by-side fibre optic assemblies, one for remote readout and the other for local readout, the optical liquid level signal is focused directly on the end of the single remote readout fibre optic assembly. This significantly increases the available light provided to the remote readout fibre optic assembly and thus compensates for the losses suffered by the signal going through the extended length of the fibre optic assembly. Further, this allows a more relaxed tolerance on the location of the single fibre optic assembly as opposed to having two fibre optic assemblies in the focal plane of the optical signal. Further, the beam splitter used to transmit the optical signal to the remote readout assembly and the local readout assembly is not limited to splitting the signal into two signals of equal intensity as with the above-described two-cable system. Instead, the ratio of transmitted to reflected signal effected by the beam splitter can be made to take into consideration the relative losses of the remote and the local readout assemblies to produce local and remote output signals of relatively equal intensity.

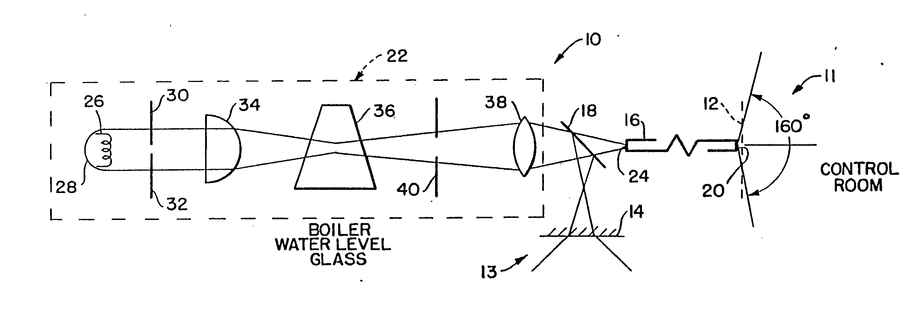

The invention will now be further described, by way of illustrative and non-limiting example, with reference to the accompanying drawing, the sole figure of which is a schematic representation of a water level indicator or gauge assembly constituting a preferred embodiment of the present invention.

The drawing shows a water level indicator or gauge assembly 10 for use in indicating a boiler drum water level. The water level indicator assembly 10 comprises one port of what is usually a six-port type water level indicator assembly for a boiler drum. Since all six ports of such indicator assemblies are identical, a single port is detailed herein. It should however be understood that any number of such ports may be used.

The water level indicator assembly 10 has a remote readout display 11 in the form of a matte screen 12, located in a control room of a power plant incorporating the boiler, from which remote location the power plant boiler is controlled. A local readout display 13 is provided by a glass diffuser 14 located proximate to the boiler drum. The glass diffuser 14, rather than the matte screen 12, is used at the boiler drum, where a hot dirty environment exists. The glass diffuser 14 spreads the light efficiently over an angle approximately equal to 90°, which is sufficient for viewing the level near the boiler drum. Larger angle dispersing elements would not hold up for long time periods in the boiler drum environment, where temperatures may exceed 93°C (200°F).

The matte screen 12 of the remote readout display 11 is mounted at an end of a fibre optic assembly or cable 16 and is used to increase the output angle of the fibre optic assembly 16 from its normal 50° output angle to 160° from the matte screen 12. The 50° field of view of the bare fibre optic cable 16 is insufficient to provide observation of the remote display 11 by a control room operator from many positions in the control room, especially at the panel usually mounted directly below the remote display 11 where boiler feedwater controls are located and where the operator frequently stands. The matte screen 12 is made to have a scattering particle size of 12 microns. These small particles scatter light efficiently into large angles. Thus, the matte screen 12 is able to increase the viewing area for the operator looking at the matte screen 12 instead of the bare cable. With this increase in viewing angle, the operator at the feedwater control panel can now see the remote display 11.

The fibre optic cable 16 is used to send the water level indication signal from a beam splitter 18 located proximately to the boiler drum to the matte screen 12, which is located in the control room of the power plant. As such, the fibre optic cable 16 usually extends for approximately 100m (330 feet). This extended length of fibre optic cable produces approximately a 40 percent loss of input signal at the exit end 20 of the fibre optic cable 16. The fibre optic cable 16 is thus seen to have a relatively low loss characteristic of approximately 50 db per kilometer as compared to low cost fibre cables which have losses in excess of 500 db per kilometer. The fibre optic cable 16 also has a fibre diameter of 0.6mm, which makes the cable 16 relatively flexible while still being a relatively low loss cable.

An optical assembly 22 shown to the left of the signal input end 24 of the fibre optic cable 16 is constructed to achieve maximum power coupling of the water level optical signal to an input end 24 of the cable 16 as well as to provide a highly visible local readout signal at the glass diffuser 14. The optical assembly 22 comprises a tungsten filament lamp 26 having a built-in reflector 28 that projects a light beam through a side-by-side red filter 30 and a green filter 32. Spaced from the filters 30 and 32 is a low F number lens 34 which focuses an image of the tungsten lamp 26 between the windows of a water level gauge 36 mounted to the boiler drum in a known manner and a coupling lens 38. Located between the water level gauge 36 and the coupling lens 38 is an aperture plate 40 so aligned that either a red or a green beam passes therethrough.

The requirements of the optical assembly 22 are first to focus onto the signal input end or front face 24 of the cable 16 an image of the filament image produced by the lens 34, second that the cone of light converging from the coupling lens 38 must be at least as large as the acceptance angle defined by the fibre of the cable 16, and thirdly, that the size of the source image must be at least as large as the fibre of the cable 16. Since both the focal length of the lens 38 as well as the separation between the lens 38 and the filament image plane can be chosen there are a number of possible choices of the lens 38 that will satisfy the recited conditions.

In operation, the light transmitted through the water level gauge 36 from the tungsten lamp 26 by virtue of the lens 34 is collected by the focusing lens 38 and is focused through the beam splitter 18 onto the (polished) signal input end 24 of the fibre optic cable 16. The beam splitter 18 transmits approximately 85 percent of the light from the focusing lens 38 onto the input end 24 of the cable 16. Approximately 15 percent of the light from the focusing lens 38 is reflected 90° to the optical axis by the beam splitter 18 onto the glass diffuser 14. The beam splitter is oriented at 45° to the optical axis to enable the glass diffuser 14 to be located with its perpendicular centre line at 90° to the optical axis. This ratio of transmitted to reflected light may be provided by selective silvering of the beam splitter 18 and/or angular rotation of the beam splitter. The rotation and silvering would compensate for the large signal loss of the cable 16 to ensure that the remote readout 11 will have a highly visible optical signal. The glass diffuser 14 is mounted on the side panel of an assembly which is normally attached to the water level gauge 36 to thus provide the local visual indication of water level at the boiler drum.

As will be seen, the above-described boiler water level indicating assembly appropriately apportions the optical signal indicative of water level in the boiler between a high-loss, remote readout display and a relatively low loss, local display to thus provide highly visible optical displays for both the remote and local displays.

## Claims

1. A liquid level gauge assembly for providing a remote display of a liquid level in a container, comprising optical means (22) operative to produce an optical signal indicative of the liquid level in the container, remote liquid level display means (11) located remote from the container, and transmission means (16) operative to transmit the optical signal to the remote liquid level display means (11), characterised in that the optical means (22) is operative to produce an optical signal indicative of the liquid level in a boiler, optical splitting means (18) is operative to divide the optical liquid level signal of the optical means (22) into first and second optical signals, the transmission means is operative to transmit the first optical signal from the optical splitting means (18) to the remote display means (11), which is located remote from the optical splitting means, and local liquid level display means (13) is located proximate to the optical splitting means (18) to display the second optical signal from the optical splitting means.

2. An assembly according to claim 1, wherein the transmission means comprises fibre optic means.

3. An assembly according to claim 2, wherein the remote display means includes a matte screen (12) for increasing the viewing angle of the first optical signal at the remote location.

4. An assembly according to claim 2 or claim 3, wherein the fibre optic means includes a fibre optic cable (16) having a signal loss of no more than 50 db per kilometer.

5. An assembly according to claim 4, wherein the fibre optic cable (16) is approximately 100 metres long.

6. An assembly according to any one of the preceding claims, wherein the optical splitting means (18) is operative to split approximately 85 percent of the liquid level signal into the first optical signal and approximately 15 percent of the liquid level signal into the second optical signal.

7. An assembly according to any one of the preceding claims, wherein the optical splitting means (18) comprises a beam splitter.

8. An assembly according to any one of the preceding claims, wherein the optical splitting means (18) is located proximate to the optical means (22).

9. An assembly according to any one of the preceding claims, wherein the optical means (22) is operative to produce a said optical signal indicative of a water level in the boiler.

## Revendications

1. Ensemble de jauge de niveau de liquide pour assurer un affichage à distance d'un niveau de liquide dans un récipient, comprenant des moyens optiques (22) agissant de manière à engendrer un signal optique indiquant le niveau de liquide dans le récipient, des moyens d'affichage de niveau de liquide a distance (11) situés à distance du récipient, et des moyens de transmission (16) agissant de manière à transmettre le signal optique aux moyens d'affichage de niveau de liquide à distance (11), caractérisé par le fait que des moyens optiques (22) agissent de manière à engendrer un signal optique indiquant le niveau de liquide dans une chaudière, que des moyens de division optique (18) agissent de manière à diviser le signal optique de niveau de liquide des moyens optiques (22) en un premier et un deuxième signaux optiques, que les moyens de transmission agissent de manière à transmettre le premier signal optique venant des moyens de division optique (18) aux moyens d'affichage à distance (11) qui sont situés à distance des moyens de division optique, et que des moyens d'affichage local de niveau de liquide (13) sont situés à proximité des moyens de division optique (18) pour afficher le deuxième signal optique venant des moyens de vision optique.

2. Ensemble selon la revendication 1, dans lequel les moyens de transmission comprennent des moyens optiques à fibres.

3. Ensemble selon la revendication 2, dans lequel les moyens d'affichage à distance comprennent un écran mat (12) pour augmenter l'angle d'observation du premier signal optique à l'emplacement éloigné.

4. Ensemble selon l'une des revendications 2 et 3, dans lequel les moyens optiques à fibres comprennent un câble d'optique à fibres (16) ayant une perte de signal non supérieure à 50 dB/km.

5. Ensemble selon la revendication 4, dans lequel le câble d'optique à fibres (16) a environ 100 m de longueur.

6. Ensemble selon l'une quelconque des revendications précédentes, dans lequel les moyens de division optique agissent de manière à séparer environ 85% du signal de niveau de liquide pour former le premier signal optique et environ 15% du signal de niveau de liquide pour former le deuxième signal optique.

7. Ensemble selon l'une quelconque des revendications précédentes, dans lequel les moyens de division optique (18) comprennent un diviseur de faisceau.

8. Ensemble selon l'une quelconque des revendications précédentes, dans lequel les moyens de division optique (18) sont situés près des moyens optiques (22).

9. Ensemble selon l'une quelconque des revendications précédentes, dans lequel les moyens optiques (22) agissent de manière à engendrer un signal optique indiquant un niveau d'eau dans la chaudière.

## Patentansprüche

1. Flüssigkeitsstand-Meßaufbau zur Schaffung einer Fernanzeige eines Flüssigkeitsstandes in einem Behälter mit optischen Mitteln (22), die geeignet sind für die Erzeugung eines optischen Signales für die Anzeige des Flüssigkeitsstandes in dem Behälter, mit entfernten Flüssigkeitsstand-Anzeigemitteln (11), die entfernt vom Behälter angeordnet sind, und Übertragungsmitteln (16), die geeignet sind zur Übertragung des optischen Signales zu den entfernten Flüssigkeitsstand-Anzeigemitteln (11), dadurch gekennzeichnet, daß das optische Mittel (22) geeignet ist zur Erzeugung eines optischen Signales als Anzeige des Flüssigkeitsstandes in einem Behälter, ein optisches Zerteilungsmittel (18) geeignet ist, zum Aufteilen des optischen Flüssigkeitsstandsignales des optischen Mittels (22) in erste und zweite optische Signale, das Übertragungsmittel geeignet ist für die Übertragung des ersten optischen Signales aus dem optischen Zerteilungsmittel (18) zu dem entfernten Anzeigemittel (11), welches entfernt von dem optischen Zerteilungsmittel angeordnet ist, und ein lokales Flüssigkeitsstand-Anzeigemittel (13) nahe dem optischen Zerteilungsmittel (18) angeordnet ist, um das zweite optische Signal aus dem optischen Zerteilungsmittel anzuzeigen.

2. Aufbau nach Anspruch 1, wobei das Übertragungsmittel optische Fasermittel aufweist.

3. Aufbau nach Anspruch 2, wobei das entfernte Anzeigemittel einen matten Schirm (12) aufweist zur Vergrößerung des Sehwinkels des ersten optischen Signales am fernen Ort.

4. Aufbau nach Anspruch 2 oder Anspruch 3, wobei das optische Fasermittel ein Kabel (16) mit optischen Fasern aufweist, welches einen Signalverlust von nicht mehr als 50 db pro Kilometer hat.

5. Aufbau nach Anspruch 4, wobei das optische Faserkabel (16) näherungsweise 100 m lang ist.

6. Aufbau nach einem der vorhergehenden Ansprüche, wobei das optische Zerteilungsmittel (18) geeignet ist zum Aufspalten von etwa 85% des Flüssigkeitsstand-Signales in das erste optische Signal und etwa 15% des Flüssigkeitsstand-Signales in das zweite optische Signal.

7. Aufbau nach einem der vorhergehenden Ansprüche, wobei das optische Zerteilungsmittel (18) eine Strahlenteilereinrichtung aufweist.

8. Aufbau nach einem der vorhergehenden Ansprüche, wobei das optische Zerteilungsmittel (18) nahe dem optischen Mittel (22) angeordnet ist.

9. Aufbau nach einem der vorhergehenden Ansprüche, wobei das optische Mittel (22) geeignet ist für die Erzeugung des optischen Signales für die Anzeige eines Wasserniveaus in einem Behälter.

BOILER
WATER LEVEL
GLASS

CONTROL
ROOM

160°

0 061 334